# EUROPÄISCHE PATENTSCHRIFT

(11) **EP 1 134 102 B1**
(45) Veröffentlichungstag und Bekanntmachung des Hinweises auf die Patenterteilung: **12.04.2006**
(21) Anmeldenummer: 01103856.9
(22) Anmeldetag: 16.02.2001
(51) Int. Cl.: B60H 1/00

(54) **Heizungs- oder Klimaanlage**
Heating or air conditioning installation
Installation de chauffage ou de climatisation

(30) Priorität: 16.03.2000 DE 10012975
(43) Veröffentlichungstag der Anmeldung: 19.09.2001
(73) Patentinhaber: DaimlerChrysler AG, 70567 Stuttgart (DE)
(72) Erfinder: Arold, Klaus, 71069 Sindelfingen (DE)

(56) Entgegenhaltungen:
- DE-A- 3 038 272
- DE-A- 19 652 523
- DE-C- 19 816 332
- FR-A- 2 753 514

## Beschreibung

Die Erfindung betrifft eine Heizungs- oder Klimaanlage zur Belüftung einer Fahrgastzelle eines Fahrzeugs gemäß dem Oberbegriff des Patentanspruchs 1.

Eine solche ist aus der DE 196 52 523 A1 bekannt. Dort ist eine Heiz- und Klimaanlage mit einem Wärmetauscher, einer Luftmischkammer und Ausstromöffnungen zum Anschließen von in eine Fahrgastzelle führenden Belüftungskanälen gezeigt.

Aus der DE 30 38 272 A1 ist eine Heiz- und Klimaanlage mit einem Klappenstellmechanismus bekannt, der miteinander gekoppelte Klappen aufweist.

Die FR 27 53 514 A zeigt einen Betätigungsmechanismus für eine zwangsgeführte Betätigung von Klappen.

Bei einer aus der DE 198 16 332 C1 bekannten Heizungs- oder Klimaanlage weist die Luftmischvorrichtung zwei separate Schließglieder für die Warmluft- und die Kaltluft-Einströmöffnung im Luftmischraum auf, um eine unterschiedliche Temperierung der über die beiden Ausströmöffnungen belüfteten Klimazonen in der Fahrgastzelle, z.B. der Mittelebene und des Fußraums zu erzielen. Das Schließglied für die Kaltluft-Einströmöffnung besteht aus zwei vertikal übereinander angeordneten, die Kaltluft-Einströmöffnung gemeinsam überdeckenden Schwenkklappen, die um einen festen Drehwinkel zueinander versetzt sind. Dieser Versatz ist so vorgenommen, daß beim Öffnen des Schließgliedes die obere Luftklappe immer einen größeren Öffnungsquerschnitt der Kaltluft-Einströmöffnung freigibt als die untere Luftklappe, so daß sich in der Mischluftkammer eine Temperaturschichtung der Mischluft ergibt und ein mit der unteren Auslaßöffnung verbundener Belüftungskanal höher temperierte Warmluft führt als ein mit der oberen Ausströmöffnung verbundener Belüftungskanal.

Grund für diese Temperaturschichtung in der Luftmischkammer ist die Erfahrung, daß der Fahrgast einen Warmluftstrom im Kopfbereich unangenehm, im Fußbereich dagegen als angenehm empfindet, so daß man bemüht ist, den Warmluftstrom im Kopfbereich auf einem niedrigeren Temperaturniveau zu halten als den in den Fußraum einströmenden Warmluftstrom.

Der Erfindung liegt die Aufgabe zugrunde, eine Heizungs- oder Klimaanlage der eingangs genannten Art so zu gestalten, daß mit geringem konstruktiven Aufwand in allen Betriebszuständen der Anlage eine für den Fahrgast angenehme Belüftung der Fahrgastzelle, insbesondere des Fonds der Fahrgastzelle, gewährleistet ist.

Die Aufgabe ist erfindungsgemäß durch die Merkmale des Patentanspruchs 1 gelöst.

Die erfindungsgemäße Heizungs- oder Klimaanlage hat den Vorteil, daß durch die drosselbare Ausströmöffnung die in den einen Belüftungskanal, der vorzugsweise zur Belüftung der Mittelebene im Fond herangezogen wird, einströmende Warmluftmenge im Heizbetrieb reduziert und im Kühlbetrieb maximiert ist. Damit strömt im Heizbetrieb eine gleichtemperierte Luft in großer Menge in den Fußraum und in nur reduzierter Menge in die Mittelebene ein. Dies führt im Heizbetrieb zu einem angenehmen Fondklima ohne unangenehme Warmluftanströmung in der Mittelebene bis zum Kopfbereich. Beim Kühlen hingegen ist die Kaltluft gleichmäßig auf beide Belüftungskanäle und damit gleichmäßig auf beide Belüftungsbereiche verteilt. Dieses ist ebenfalls vorteilhaft, da Kühlluft in der Mittelebene - im Gegensatz zu Warmluft - als angenehm empfunden wird. Die beschriebene Luftverteilung wird infolge der Betätigung des Drosselorgans durch die Luftmischvorrichtung ohne großen Aufwand und ohne zusätzlichen Stellantrieb erreicht. Eine Fehlbedienung in der Einstellung der Belüftung ist ausgeschlossen.

Vorteilhafte Ausführungsformen der erfindungsgemäßen Heizungs- oder Klimaanlage mit zweckmäßigen Weiterbildungen und Ausgestaltungen der Erfindung sind in den weiteren Patentansprüchen angegeben.

Gemäß einer vorteilhaften Ausführungsform der Erfindung weist die Luftmischvorrichtung zwei separate Schließglieder auf, von denen eines den Öffnungsquerschnitt der Warmluft-Einströmöffnung und eines den Öffnungsquerschnitt der Kaltluft-Einströmöffnung steuert, wobei das Drosselorgan mit einem der beiden Schließglieder zwangsgekoppelt ist. Diese Zwangskopplung erspart einen separaten Antrieb für das Drosselorgan und macht
- da keine Eingriffsmöglichkeit für den Fahrgast vorhanden ist
- eine Fehlbedienung unmöglich.

Gemäß einer bevorzugten Ausführungsform der Erfindung ist das Drosselorgan als Schwenkschieber ausgebildet, der um eine parallel zur Normalen der Ausströmöffnung verlaufende Drehachse in einer zur Ausströmöffnung parallelen Ebene schwenkbar ist. Durch Drehen des Schwenkschiebers wird die Ausströmöffnung mehr oder weniger abgedeckt, wobei das Maximum ihrer Abdeckung sehr einfach einstellbar ist.

Die Erfindung ist anhand von in der Zeichnung dargestellten Ausführungsbeispielen im folgenden näher beschrieben. Es zeigen in schematischer Darstellung:
- Fig. 1: ausschnittweise einen horizontal verlaufenden Querschnitt eines Klimakastens einer Heizungs- oder Klimaanlage,
- Fig. 2: ausschnittweise eine gleiche Darstellung wie in Fig. 1 mit einem modifizierten Klimakasten.

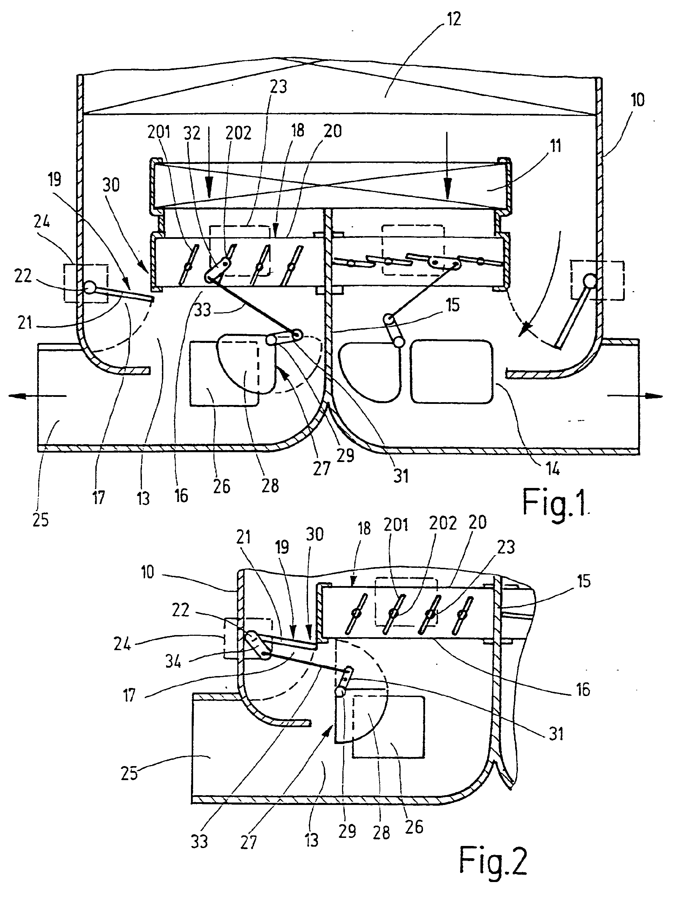

Der in Fig. 1 schematisch in Draufsicht geschnitten dargestellte Klimakasten 10 einer Heizungs- oder Klimaanlage für eine Fahrgastzelle eines Fahrzeugs ist eingangsseitig in bekannter Weise an ein hier nicht dargestelltes Gebläse angeschlossen. In dem Klimakasten 10 ist ein luftdurchströmbarer Wärmetauscher 11 aufgenommen, dem in der Ausführung als Klimaanlage zusätzlich ein Verdampfer 12 in Luftströmungsrichtung gesehen vorgeordnet ist. Der Wärmetauscher 11 wird in bekannter Weise von einem Heizmedium durchströmt, wozu üblicherweise das Kühlwasser der Brennkraftmaschine des Fahrzeugs verwendet wird. In Luftströmungsrichtung hinter dem oder stromabwärts vom Wärmetauscher 11 sind im Klimakasten 10 zwei nebeneinander angeordnete, durch eine Trennwand 15 separierte Luftmischkammern 13, 14 ausgebildet, die zur Luftversorgung der rechten bzw. linken Seite der Fahrgastzelle des Fahrzeugs dienen. Die Luftmischkammern 13, 14 sind identisch ausgebildet und mit gleichen Elementen zur Luftsteuerung ausgerüstet, so daß im folgenden nur auf die linke Luftmischkammer 13 Bezug genommen wird, die gleichen Ausführungen aber auch für die rechte Luftmischkammer 14 gelten.

Die Luftmischkammer 13 weist eine hinter dem Wärmetauscher 11 angeordnete Warmluft-Einströmöffnung 16, die unmittelbar an der Luftaustrittsfläche 111 des Wärmetauschers 11 abgegriffen ist, und eine seitlich des Wärmetauschers 11 diesen umgehend angeordnete Kaltluft-Einströmöffnung 17, über die direkt vom Verdampfer 12 kommende, den Wärmetauscher 11 umströmende Kaltluft in die Luftmischkammer 13 einströmen kann, sowie eine die Luftmenge durch die Einströmöffnungen 16, 17 steuernde Luftmischvorrichtung 30 auf. Jeder Einströmöffnung 16, 15 ist ein Schließglied 18 bzw. 19 der Luftmischvorrichtung 30 zum Steuern des Öffnungsquerschnitts zugeordnet. Im Ausführungsbeispiel ist das Schließglied 18 für die Warmluft-Einströmöffnung 16 als bauraumsparender Jalousieverschluß 20 mit einer Vielzahl von nebeneinander angeordneten, schmalen Schwenklamellen 201 ausgebildet, die in ihrer Gesamtheit die Warmluft-Einströmöffnung 16 abzudecken vermögen. Das Schließglied 19 für die Kaltluft-Einströmöffnung 17 ist als Schwenkklappe 21 ausgebildet, die um eine Drehachse 22 zwischen zwei Schwenkendstellungen, in denen die Kaltluft-Einströmöffnung 17 vollständig geschlossen bzw. vollständig geöffnet ist, schwenkbar ist. Der Jalousieverschluß 20 wird von einem Stellmotor 23 und der Schwenkklappe 21 von einem Stellmotor 24 angetrieben. Beide Stellmotoren 23, 24 sind nur strichliniert angedeutet.

Für die Belüftung der Fahrgastzelle mit temperierter Luft weist die Luftmischkammer 13 mehrere Ausströmöffnungen auf, von denen in Fig. 1 nur die beiden Ausströmöffnungen für den Fond der Fahrgastzelle dargestellt sind. Dabei dient die Ausströmöffnung 25 zum Anschließen eines Belüftungskanals, der zu dem Fußraum des Fonds in der linken Hälfte der Fahrgastzelle führt, und die Ausströmöffnung 26 zum Anschluß eines Belüftungskanals, der in die Mittelebene des Fonds in der linken Hälfte der Fahrgastzelle führt. Letzgenannter Ausströmöffnung 26 ist ein Drosselorgan 27 zum Drosseln des Öffnungsquerschnittes zugeordnet, dessen Betätigung durch die Luftmischvorrichtung 30 so erfolgt, daß der Öffnungsquerschnitt der Ausströmöffnung 26 bei maximal freigegebener Warmluft-Einströmöffnung 16 maximal gedrosselt (in Fig. 1 in der linken Luftmischkammer 13 dargestellt) und bei maximal freigegebener Kaltluft-Einströmöffnung 17 vollständig freigegeben ist (in Fig. 1 in der rechten Luftmischkammer 14 dargestellt).

Im Ausführungsbeispiel der Fig. 1 ist das Drosselorgan 27 als Schwenkschieber 28 ausgebildet, der um eine parallel zur Normalen der Ausströmöffnung 26 verlaufende Drehachse 29 in einer zur Ausströmöffnung 26 parallelen Ebene schwenkbar ist. Dabei ist der Schwenkschieber 28 mit dem Schließglied 18 für die Warmluft-Einströmöffnung 16 zwangsgekoppelt. Hierzu ist an der Drehachse 29 des Schwenkschiebers 28 ein Schwenkhebel 31 und an der Schwenkachse 202 einer Schwenklamelle 201 ein Schwenkhebel 32 starr befestigt. An den beiden freien Enden der Schwenkhebel 31, 32 ist eine Koppelstange 33 angelenkt. Beim Verschwenken der Scnwenklamellen 201 durch den Stellmotor 23 wird der Schwenkschieber 28 mitgeschwenkt, und zwar in einer solchen Weise, daß mit Schließen der Schwenklamellen 201 der Schwenkschieber 28 zunehmend von der Ausströmöffnung 26 abgeschwenkt wird, bis in der Schließstellung der Schwenklamellen 201 (in Fig. 1 in der rechten Luftmischkammer 14 dargestellt), die Ausströmöffnung 26 von dem Schwenkschieber 28 vollständig freigegeben ist. Die bei geöffneter Schwenkklappe 21 in die Luftmischkammer 13-einströmende Kalt- oder Frischluft kann nunmehr über den vollen Öffnungsquerschnitt der Ausströmöffnung 26 ausströmen. Die Heizungs- oder Klimaanlage arbeitet im Kühl- oder Frischluftmodus.

Im Heizbetrieb wird bei mehr oder weniger durch die Schwenkklappe 21 geschlossener Kaltluft-Einströmöffnung 17 die Warmluft-Einströmöffnung 16 durch Schwenken der Schwenklamellen 201 mehr oder weniger geöffnet. Mit zunehmendem Schwenken der Schwenklamellen 201 schiebt sich der Schwenkschieber 28 zunehmend über die Ausströmöffnung 26 und drosselt deren Öffnungquerschnitt. Bei vollständig geöffnetem Jalousieverschluß 20 ist der Schwenkschieber 28 maximal überdie Ausströmöffnung 26 geschwenkt, wie dies in Fig. 1 in der linken Luftmischkammer 13 dargestellt ist. Die Heizungs- oder Klimaanlage arbeitet im Heizmodus, und der über die Ausströmöffnung 16 austretenden Warmluftstrom ist wesentlich reduziert, so daß der größere Anteil der Warmluftmenge über die Ausströmöffnung 25 abströmt.

Bei der in Fig. 2 ausschnittweise mit ihrem Klimakasten 10 dargestellten Heizungs- oder Klimaanlage ist die Zwangskopplung zwischen der Luftmischvorrichtung 30 und dem Drosselorgan 27 insofern modifiziert, als letzteres an das Schließglied 19 für die Kaltluft-Einströmöffung 17 angekoppelt ist. Hierzu ist wiederum ein Schwenkhebel 31 an der Drehachse 29 des Schwenkschiebers 28 und ein Schwenkhebel 34 an der Drehachse 22 der Schwenkklappe 21 jeweils starr befestigt und an den beiden freien Enden der Schwenkhebel 31, 34 die Koppelstange 33 angelenkt. Da die Betätigung des Jalousieverschlusses 20 und der Schwenkklappe 21 über deren Stellmotore 23 und 24 so synchronisiert ist, daß mit Öffnen des Jalousieverschlusses 20 die Schwenkklappe 21 schließt und umgekehrt, ist die Funktionsweise des Schwenkschiebers 28 bzw. des Drosselorgans 27 die gleich wie zu Fig. 1 beschrieben.

Die Erfindung ist nicht auf die beschriebenen Ausführungsbeispiele beschränkt. So kann die Luftmischvorrichtung 30 zur Luftmischung der in die Luftmischkammer 13 bzw. 14 über die Warmluft-Einströmöffnung 16 und Kaltluft-Einströmöffnung 17 einströmende Luftmengen auch nur eine einzige schwenkbare Luftmischklappe aufweisen, die in ihrer einen Endstellung die Warmluft-Einströmöffnung 16 vollständig schließt und die Kaltluft-Einströmöffnung 17 vollständig freigibt und in ihrer anderen Schwenkendstellung umgekehrt die Warmluft-Einströmöffnung 16 vollständig freigibt und die Kaltluft-Einströmöffnung 17 vollständig schließt. In diesem Fall ist das Drosselorgan 27 mit der Luftmischklappe so gekoppelt, daß in der Heizstellung der Luftmischklappe die Ausströmöffnung 26 gedrosselt und in der Klühlstellung der Luftmischklappe die Ausströmöffnung 26 vollständig freigegeben ist. Bei Wegfall des Verdampfers 12 arbeitet die beschriebene Anlage als reine Heizungsanlage und wird nach Abschalten des Wärmetauschers 11 zur Belüftung der Fahrgastzelle mit Frischluft verwendet.

## Patentansprüche

1. Heizungs- oder Klimaanlage zur Belüftung einer Fahrgastzelle eines Fahrzeugs, mit einem Klimakasten (10), in dem ein luftdurchströmbarer Wärmetauscher (11) aufgenommen und mindestens eine Luftmischkammer (13, 14) ausgebildet ist, die eine Einströmöffnung (16) für den Wärmetauscher (11) durchströmende Warmluft und eine Einströmöffnung (17) für den Wärmetauscher (11) umströmende Kaltluft sowie mindestens zwei Ausströmöffnungen, insbesondere zum Anschließen von in die Fahrgastzelle führenden Belüftungskanälen, aufweist, und mit einer die Öffnungsquerschnitte der Einströmöffnungen (16, 17) steuernden Luftmischvorrichtung (30), wobei an einer Ausströmöffnung (26) ein Drosselorgan (27) zum Drosseln des Öffnungsquerschnitts angeordnet ist
**dadurch gekennzeichnet,**
**daß**, die Betätigung des Drosselorgans (27) durch die Luftmischvorrichtung (30) so erfolgt, daß der Öffnungsquerschnitt der Ausströmöffnung (26) bei maximal freigegebener Warmluft-Einströmöffnung (16) maximal gedrosselt und bei maximal freigegebener Kaltluft-Einströmöffnung (17) vollständig freigegeben ist und das Drosselorgan (27) als Schwenkschieber (28) ausgebildet ist, der um eine parallel zur Normalen der Ausströmöffnung (26) verlaufende Drehachse (29) in einer zur Ausströmöffnung (26) parallelen Ebene schwenkbar ist.

2. Anlage nach Anspruch 1,
**dadurch gekennzeichnet,**
**daß** die Luftmischvorrichtung (30) zwei Schließglieder (18, 19) aufweist, von denen eines den Öffnungsquerschnitt der Warmluft-Einströmöffnung (16) und eines den Öffnungsquerschnitt der Kaltluft-Einströmöffnung (17) steuert, und daß das Drosselorgan (27) mit einem der Schließglieder (18, 19) zwangsgekoppelt ist.

3. Anlage nach Anspruch 1 oder 2,
**dadurch gekennzeichnet,**
**daß** das Schließglied (18) für die Warmluft-Einströmöffnung (16) als Jalousieverschluß (20) mit einer Mehrzahl von nebeneinander angeordneten Schwenklamellen (201) ausgebildet ist und daß der Schwenkschieber (28) über eine Koppelstange (33) an mindestens einer Schwenklamelle (201) angebunden ist.

4. Anlage nach Anspruch 3,
**dadurch gekennzeichnet,**
**daß** an der Drehachse (29) des Schwenkschiebers (28) und an der Schwenkachse (202) der Schwenklamelle (201) jeweils ein Schwenkhebel (31, 32) starr befestigt ist und daß an den freien Enden der Schwenkhebel (31, 32) die Koppelstange (33) angelenkt ist.

5. Anlange nach Anspruch 1,
**dadurch gekennzeichnet,**
**daß** das Schließglied (19) für die Kaltluft-Einströmöffnung (17) als Schwenkklappe (21) ausgebildet ist und daß der Schwenkschieber (28) über eine Koppelstange (33) an der Schwenkklappe (21) angebunden ist.

6. Anlage nach Anspruch 5,
**dadurch gekennzeichnet,**
**daß** an der Drehachse (29) des Schwenkschiebers (28) und an der Drehachse (22) der Schwenkklappe (21) jeweils ein Schwenkhebel (31, 34) starr befestigt und an den freien Enden der Schwenkhebel (31, 34) die Koppelstange (33) angelenkt ist.

7. Anlage nach einem der Ansprüche 1 - 6,
**dadurch gekennzeichnet,**
**daß** an die Ausströmöffnungen (25, 26) anschließbare Belüftungskanäle im Fond der Fahrgastzelle münden und daß die Mündung des Belüftungskanals, der an die mit dem Drosselorgan (27) versehene Ausströmöffnung (26) angeschlossen ist in der Mittelebene und die Mündung des anderen Belüftungskanals im Fußraum des Fonds angeordnet ist.

## Claims

1. Heating or air-conditioning system for ventilating a passenger cell of a vehicle, having an air-conditioning box (10), in which a heat exchanger (11), through which air can flow, is accommodated and at least one air-mixing chamber (13, 14) is formed, the said air-mixing chamber having an inflow opening (16) for hot air flowing through the heat exchanger (11) and an inflow opening (17) for cold air flowing around the heat exchanger (11), and also having at least two outflow openings, in particular for the connection of ventilation ducts leading into the passenger cell, with the said system also having an air-mixing device (30) controlling the opening cross sections of the inflow openings (16, 17), one outflow opening (26) having arranged on it a restricting element (27) which is intended for restricting the opening cross section, **characterized in that** the restricting element (27) is actuated by the air-mixing device (30) in such a manner that the opening cross section of the outflow opening (26) is restricted to the maximum when the hot-air inflow opening (16) is opened up to the maximum, and is completely opened up when the cold-air inflow opening (17) is opened up to the maximum and the restricting element (27) is designed as a pivoting slide (28) which can be pivoted about a rotational spindle (29), which runs parallel to the perpendicular of the outflow opening (26), in a plane parallel to the outflow opening (26).

2. System according to Claim 1, **characterized in that** the air-mixing device (30) has two closing members (18, 19), one of which controls the opening cross section of the hot-air inflow opening (16) and one the opening cross section of the cold-air inflow opening (17), and **in that** the restricting element (27) is forcibly coupled to one of the closing members (18, 19).

3. System according to Claim 1 or 2, **characterized in that** the closing member (18) for the hot-air inflow opening (16) is designed as a louvred closure (20) having a plurality of pivoting slats (201) arranged next to one another, and **in that** the pivoting slide (28) is connected to at least one pivoting slat (201) via a coupling rod (33).

4. System according to Claim 3, **characterized in that** respective pivoting levers (31, 32) are fastened rigidly to the rotational spindle (29) of the pivoting slide (28) and to the pivoting spindle (202) of the pivoting slat (201), and **in that** the coupling rod (33) is coupled to the free ends of the pivoting levers (31, 32).

5. System according to Claim 1, **characterized in that** the closing member (19) for the cold-air inflow opening (17) is designed as a pivoting flap (21), and **in that** the pivoting slide (28) is connected to the pivoting flap (21) via a coupling rod (33).

6. System according to Claim 5, **characterized in that** respective pivoting levers (31, 34) are fastened rigidly to the rotational spindle (29) of the pivoting slide (28) and to the rotational spindle (22) of the pivoting flap (21) and the coupling rod (33) is coupled to the free ends of the pivoting levers (31, 34).

7. System according to one of Claims 1-6, **characterized in that** ventilation ducts which can be connected to the outflow openings (25, 26) open into the rear area of the passenger cell, and **in that** the outlet of the ventilation duct which is connected to that outflow opening (26) which is provided with the restricting element (27) is arranged in the central plane and the outlet of the other ventilation duct is arranged in the footwell of the rear area.

## Revendications

1. Installation de chauffage ou de climatisation pour la ventilation de l'habitacle d'un véhicule, comprenant une boîte de climatisation (10), dans laquelle est reçu un échangeur de chaleur (11) pouvant être parcouru par un courant d'air et dans laquelle est au moins réalisée une chambre de mélange d'air (13, 14), qui présente une ouverture d'entrée (16) pour l'air chaud traversant l'échangeur de chaleur (11) et une ouverture d'entrée (17) pour l'air froid circulant autour de l'échangeur de chaleur (11) ainsi qu'au moins deux ouvertures de sortie, notamment pour le raccordement de conduits de ventilation conduisant dans l'habitacle du véhicule, et comprenant un dispositif de mélange d'air (30) commandant les sections transversales d'ouverture des ouvertures d'entrée (16, 17), un organe d'étranglement (27) pour l'étranglement de la section transversale d'ouverture étant disposé au niveau d'une ouverture de sortie (26),
**caractérisée en ce que**
l'actionnement de l'organe d'étranglement (27) par le dispositif de mélange d'air (30) s'effectue de telle sorte que la section transversale d'ouverture de l'ouverture de sortie (26) soit étranglée au maximum pour une ouverture d'entrée d'air chaud (16) libérée au maximum et soit libérée complètement pour une ouverture d'entrée d'air froid (17) libérée au maximum, et l'organe d'étranglement (27) est réalisé sous la forme d'un coulisseau pivotant (28) qui peut pivoter autour d'un axe de rotation (29) s'étendant parallèlement à la normale à l'ouverture de sortie (26) dans un plan parallèle à l'ouverture de sortie (26).

2. Installation selon la revendication 1,
**caractérisée en ce que**
le dispositif de mélange d'air (30) présente deux organes de fermeture (18, 19) dont l'un commande la section transversale d'ouverture de l'ouverture d'entrée d'air chaud (16) et l'un commande la section transversale d'ouverture de l'ouverture d'entrée d'air froid (17), et **en ce que** l'organe d'étranglement (27) est couplé par force à l'un des organes de fermeture (18, 19).

3. Installation selon la revendication 1 ou 2,
**caractérisée en ce que**
l'organe de fermeture (18) pour l'ouverture d'entrée d'air chaud (16) est réalisé sous la forme d'une fermeture à lamelles (20) avec une pluralité de lamelles pivotantes (201) disposées les unes à côté des autres et **en ce que** le coulisseau pivotant (28) est relié par le biais d'une tige d'accouplement (33) à au moins une lamelle pivotante (201).

4. Installation selon la revendication 3,
**caractérisée en ce qu'**
un levier pivotant respectif (31, 32) est fixé rigidement à l'axe de rotation (29) du coulisseau pivotant (28) et à l'axe de pivotement (202) de la lamelle pivotante (201) et **en ce que** la tige d'accouplement (33) est articulée aux extrémités libres des leviers pivotants (31, 32).

5. Installation selon la revendication 1,
**caractérisée en ce que**
l'organe de fermeture (19) pour l'ouverture d'entrée d'air froid (17) est réalisé sous la forme d'un volet pivotant (21) et **en ce que** le coulisseau pivotant (28) est connecté par le biais d'une tige d'accouplement (33) au volet pivotant (21).

6. Installation selon la revendication 5,
**caractérisée en ce qu'**
un levier pivotant respectif (31, 34) est fixé rigidement à l'axe de rotation (29) du coulisseau pivotant (28) et à l'axe de rotation (22) du volet pivotant (21), et la tige d'accouplement (33) est articulée aux extrémités libres des leviers pivotants (31, 34).

7. Installation selon l'une quelconque des revendications 1 à 6,
**caractérisée en ce que**
des conduits de ventilation pouvant être raccordés aux ouvertures de sortie (25, 26) débouchent au fond de l'habitacle et **en ce que** l'embouchure du conduit de ventilation, qui est raccordée à l'ouverture de sortie (26) pourvue de l'organe d'étranglement (27), est disposée dans le plan médian, et l'embouchure de l'autre conduit de ventilation est disposée dans l'espace pour les pieds du fond.
